# EUROPEAN PATENT APPLICATION

(11) **EP 4 741 252 A1**
(43) Date of publication of application: **13.05.2026**
(21) Application number: 24306873.1
(22) Date of filing: 07.11.2024
(51) Int. Cl.: B61L 27/20, B61L 27/60, G05B 17/00, G06F 30/20

(54) **DESIGNING AND/OR CONTROLLING A RAILWAY SIGNALLING SYSTEM**

(71) Applicant: ALSTOM Holdings, 93400 Saint-Ouen-sur-Seine (FR); University of Pisa, 56121 Pisa (IT)
(72) Inventor: Nocente, Arianna, 72021 Francavilla Fontana (Br) (IT); Spigarolo, Lorenza, 40033 Casalecchio di Reno (Bo) (IT); Guerra, Alessandro, 44122 Ferrara (IT)
(74) Representative: Brunotte, Joachim Wilhelm Eberhard

(57) **Abstract**

The invention relates to a computer-implemented method of designing and/or controlling a railway signalling system (2) comprising the steps:
- providing at least one finite state machine (FSM), for which
∘ a plurality of states (ST) are defined that can be assumed by the finite state machine (FSM),
∘ a plurality of transitions (31 to 35) are defined, each transition being a transition from one of the defined states (ST) to either the same defined state or to a different one of the defined states (ST),
∘ a plurality of conditions are defined, the conditions depending on input information, wherein fulfilment of any one of the conditions triggers an assigned one of the defined transitions (31 to 35),
∘ a plurality of attributes are defined as output information, wherein each attribute may assume, at a time, one of a plurality of pre-defined values, wherein each of the plurality of defined states (ST) is assigned to at least one of the defined attributes having a specific one of the pre-defined values,
wherein the plurality of states (ST) of the finite state machine (FSM) are signalling states that can be realised in railway signalling systems in relation to a single component or an arrangement of components of a railway track or railway track system (1),
- evaluating a functional behaviour of each of the at least one finite state machine (FSM), based on different sets of input information that result in the fulfillment of different ones of the plurality of defined conditions, by checking that respective ones of the plurality of defined states (ST), that are assumed in reaction to the different sets of input information, in each case correspond to an expected state and/or that the output information represented by the values of the plurality of defined attributes, that are assumed in reaction to the different sets of input information, in each case correspond to expected values,
- receiving a design of a railway track or railway track system (1) that comprises a railway signalling system (2) and generating a computer model of the railway signalling system (2) by using at least one instance of at least one evaluated finite state machine (FSM), which has been evaluated according to the preceding step,
- simulating a behaviour of the railway signalling system (2) by using the computer model and outputting results of the simulation for realizing the railway signalling
system (2) in practice and/or using the computer model to control an operation of the railway signalling system (2).

## Description

The invention relates to a computer-implemented method of designing and/or controlling a railway signalling system. Furthermore, the invention relates to a computer program or an arrangement of computer programs for executing the computer-implemented method. Also, the invention relates to a computer-readable storage medium comprising instructions that cause a computer or an arrangement of computers to execute the method. A computer or computer arrangement comprising the computer program or arrangement of computer programs and/or comprising the computer-readable storage medium is also related to the invention.

Operating rail vehicles on railways requires control of the movement of the rail vehicles, which control is performed using railway signalling systems. If a new railway signalling system is to be implemented, or if an existing railway signalling system shall be updated or adapted to new requirements, it is common practice to design the railway signalling system first and then to realize it in practice. In particular with respect to a specific railway track system, designing the railway signalling system first allows for implementing and testing of the correct function. However, this requires substantial time and effort.

It is an object of the present invention to provide a method of designing a railway signalling system, a computer program or an arrangement of computer programs for performing the method and/or a computer-readable storage medium comprising instructions that cause a computer or a computer arrangement to perform the method that reduces the effort of designing.

It is proposed to use at least one finite state machine in order to represent signalling states of a railway signalling system and to evaluate a functional behaviour of the finite state machine(s) before an implementation of the finite state machine(s) is used to model a specific realization of a railway signalling system. A finite-state machine (FSM) is also known as finite-state automaton (FSA), or (in short) a state machine. It is a mathematical description of computation and/or modelling and the state machine can be in exactly one of a finite number of defined states at any given time. The FSM can change from one state to another in response to and therefore depending on input information. The change from one state to another is known as a transition. An FSM can be defined by a set of its states, its initial and/or default state and the input information that triggers each transition.

Advantages of the proposal are that components of a computer model, namely implementations of the at least one finite state machine, of a specific railway signalling system can be tested in an early stage of its design and that the tested finite state machines can be used in multiple implementations of specific railway signalling systems. In particular, different implementations of the same tested finite state machine can be used in a computer model of the same railway signalling system and can be used in several computer models, each modelling a different one of railway signalling systems.

According to the proposal, the states of the finite state machine are signalling states that can be realized in railway signalling systems. Preferably, there are different types of the finite state machines. Although some of the signalling states defined for the different types might be the same signalling states, the complete set of defined states differs for the various types. For example, one type of finite state machine may be related to
- control of entry of railway vehicles into a railway station (or alternatively to control of railway vehicles leaving a railway station),
- control of track section occupation,
- transition of different levels of control of vehicle departure,
- control of a shunting area for shunting rail vehicles,
- control, evaluation and/or management of track-side mounted sensors for monitoring traffic or monitoring states of rail vehicles, such as states of axles, wheels and brakes, wherein certain sensor signals result in changes of traffic control, such as reduced vehicle speed in track sections,
- control of entry/occupation of a track section with a crossing (e.g. a road crossing the track section).

For all these controls and other subjects with respect to in each case one part of a railway track system, the complete sets of defined states differ. In more general terms, types of finite state machines may be defined for in each case one set of signalling states in relation to control of rail traffic in a corresponding part of a railway or of a railway track system.

Examples of signalling states are "locked" (i.e. entry/passage is not allowed), "unlocked" (i.e. entry/passage is allowed), "unlocked on sight" (i.e. entry/passage is allowed, but the driver of the rail vehicle must take into account that the entered track section may be occupied by another vehicle), "emergency locking" (i.e. travelling/entry is not allowed based on emergency and/or safety considerations, such as too many railway vehicles traveling on consecutive track sections of the same track) and "unconditional Movement Authority" (i.e. entry/passage is allowed and no specific conditions are set for travel on the entered track section). Consequently, there may be variants of "locked", for example "locked" for a specific reason and/or for "unlocked", for example passage is allowed if specific conditions are observed. For these variants, different conditions may be defined that trigger the transitions to other states. If, for example, the reason for the "locked" state is an emergency in a region of a railway track system, the condition for a transition from the state may include that the emergency situation has terminated. Some FSMs may not comprise all of these (or even none of these) signalling states in their set of defined states.

In particular when implementations of finite state machine are used as part of a computer program, consecutive steps of simulating and/or controlling the railway signalling system can be performed according to the rules of operation of the finite state machine(s). At the beginning of each step, the respective finite state machine is in one of the defined states. Input information is received or may be received in a step and by using the input information it is determined if one of the defined conditions is fulfilled which then may trigger a transition. However, even if one of the defined conditions is fulfilled, there may be no transition that is assigned to the fulfilled condition and that can be performed, because the finite state machine is not in a state for which the transition is defined, a transition can be referred to as non-executable transition. In any case, the input information that is input to the finite state machine is preferably evaluated in order to determine if any of the defined conditions is fulfilled.

In particular, proposed is a computer-implemented method of designing and/or controlling a railway signalling system comprising the steps:
- providing at least one finite state machine, for which
   ∘ a plurality of states are defined that can be assumed by the finite state machine,
   ∘ a plurality of transitions are defined, each transition being a transition from one of the defined states to either the same defined state or to a different one of the defined states,
   ∘ a plurality of conditions are defined, the conditions depending on input information, wherein fulfilment of any one of the conditions triggers an assigned one of the defined transitions,
   ∘ a plurality of attributes are defined as output information, wherein each attribute may assume, at a time, one of a plurality of pre-defined values, wherein each of the plurality of defined states is assigned to at least one of the defined attributes having a specific one of the pre-defined values,
   wherein the plurality of states of the finite state machine are signalling states that can be realised in railway signalling systems in relation to a single component or an arrangement of components of a railway track or railway track system,
- evaluating a functional behaviour of each of the at least one finite state machine, based on different sets of input information that result in the fulfilment of different ones of the plurality of defined conditions, by checking that respective ones of the plurality of defined states, that are assumed in reaction to the different sets of input information, in each case correspond to an expected state and/or that the output information represented by the values of the plurality of defined attributes, that are assumed in reaction to the different sets of input information, in each case correspond to expected values,
- receiving a design of a railway track or railway track system that comprises a railway signalling system and generating a computer model of the railway signalling system by using at least one instance of at least one evaluated finite state machine, which has been evaluated according to the preceding step,
- simulating a behaviour of the railway signalling system by using the computer model and outputting results of the simulation for realizing the railway signalling system in practice and/or using the computer model to control an operation of the railway signalling system.

In particular, an initial and/or default state of each finite state machine is defined as well. For example, the default state "locked" may be defined in many cases for safety reasons.

Examples of the states of the finite state machine have been given above and will be given below. The fact that there is a plurality of defined states of the finite state machine and that these defined states are signalling states of a railway signalling system does not exclude at least one additional state of the same finite state machine that does not correspond to a signalling state of a railway signalling system. For example, one state of this kind may be a state corresponding to a fault of the control of the respective part of a railway track system. In practice, a railway signalling system would stop all traffic in the affected part of the railway track system. Another example of such an additional state may be a state of the railway track system that is to be controlled by the railway signalling system. In practice, such a state may be an occupational state (such as occupied or not occupied by a railway vehicle) of a track section.

There may be at least one of the plurality of defined conditions that can trigger different transitions. Each defined transition unambiguously defines a transition from a first specific state to the first specific state or alternatively to a second specific state. Such a transition can therefore only occur if the finite state machine is in the first specific state. However, for example, fulfilment of a specific defined condition may trigger either a transition from the first specific state to the second specific state or from a third specific state to the second specific state. E.g., the second specific state may be the state "locked" and the condition may correspond to a situation in which entry into a track section or railway station or passage of a track node (a specific location on a railway track) should not be allowed. When the condition is fulfilled, the finite state machine that is designed to represent the control of the corresponding part of the railway track system may be in different states and, correspondingly, the condition is assigned to different respective transitions.

As mentioned, the functional behaviour of each of the at least one FSM is evaluated. In case of a plurality of FSMs, there can be at least one FSM that is independent on the output information produced by other FSMs. However, it is also possible that there is at least one FSM that is not independent (i.e. it is dependent on the output produced by at least one other FSM). When evaluating the functional behaviour of this FSM or of these FSMs, the output information of at least one other FSM can be considered when evaluating the functional behaviour with respect to the transition of states of the respective dependent FSM.

According to the above description and to further parts of the description below, there are several items (such as the states) defined with respect to the finite state machine. Of course, as is the case for a finite state machine in general, an implementation of the finite state machine requires rules of operation. In a computer implementation, the rules can be implemented in a computer program. At the level of designing the finite state machine, the rules can be expressed by an algorithm that can be computer implemented already or can be defined in a different matter. The rules of operation correspond to the functionality that is to be performed by the finite state machine. Therefore, it is an additional optional step of the computer-implemented method to transform the definitions of the states, the transitions, the conditions and the attributes into a computer program. For example, a corresponding computer program may exist and it may be configured automatically according to the definitions. In other words, there may be a computer program for performing this configuration of the existing computer program.

As mentioned, each attribute may assume at any point in time (or at the end of each step of operating the state machine) one of a plurality of pre-defined values. According to a specific embodiment, at least some of the attributes and for example all of the attributes may be Boolean attributes, so that their pre-defined values are "True" and "False". However, there are embodiments in which at least one attribute has more than two predefined values. As mentioned, these values are output information as well. This does not exclude that there is additional output information, and in particular in the step of evaluating the functional behaviour of the finite state machine the state of the finite state machine may also be information that is output (from the FSM), in this case for performing the evaluation.

As also mentioned before, the values of the plurality of attributes are defined as output information. The value, that is assumed by the respective attribute at a time, contains the output information in the context of the attribute and/or in the context of the use of the attribute for the design and/or the control of a railway signalling system. In particular the value of the attribute (and, in case of a plurality of the attributes, the values of the attributes) can be used as the input information mentioned before. This input information in particular may change in consecutive steps of simulating and/or controlling the railway signalling system that can be performed. Therefore, in each consecutive step, the output information that is contained by the value(s) of the attributes(s) at a time can be used as the input information, in particular by different FSMs and considering the context mentioned before. In other words, a first FSM may output information by setting a value of at least one attribute and this output information can be used by at least one other FSM as input information in the consecutive step. This way of outputting and inputting information may be called communication.

In particular, different states may be assigned to the same pre-defined value of the same attribute and this may also apply to at least one pre-defined value of at least one further attribute. In other words, for each state of the finite state machine there may be defined a set of assigned attribute values. Each of these attribute values is a pre-defined value of a different one of the defined attributes. For example, a specific state may be assigned to the value "True" of a first attribute, the value "True" of a second attribute and to the value "False" of a third attribute. The values of the first and of the second attribute that are assigned to the specific state are the same value "True", but the first and the second attributes are different attributes.

In some embodiments of the invention, the value of the attribute that is assigned to the respective state may comprise information about the state, such as the state "locked". Since there may be different states of the same finite state machine for which the same information is correct, the information may not unambiguously define which state it relates to. Reference is made to the above example that there may be different states with "locked", i.e. entry/passage is not allowed.

In addition or alternatively, the assigned attribute value of the state may comprise information about an operation state of a part of the railway track system that is to be controlled by an implementation of the finite state machine. The part may be the controlled part or another part of the railway track system. The assigned attribute value may for example express that a track section is occupied. Another pre-defined value of the same attribute may express that this track section is not occupied. However, this other value of the same attribute may only be assigned to a different state of the finite state machine. Another example is that the assigned attribute value expresses that a railway vehicle in a track section is not only occupying the track section, but is at a standstill. A further pre-defined value of the same attribute may express that a railway vehicle is occupying the track section, but is driving.

There may be other types of information expressed by certain values of certain attributes. Some of this kind of information has been stated as an example above with respect to states of a FSM, such as "unconditional Movement Authority" and "emergency locking". Generally, this means that a FSM may assume a state and may output information on the state by setting a corresponding at least one attribute to the respective predefined value.

The step of evaluating the functional behaviour of the respective finite state machine (FSM) may comprise, as mentioned, testing the state of the FSM and/or checking the values of the attributes. In some embodiments of the method, checking the values of the attributes may be sufficient, since these values are assigned to the current state of the FSM. However, in other embodiments the values of the attributes might not unambiguously define a state, because there may be at least one other state to which the same set of attribute values is assigned. Furthermore, the states that are assumed by the FSM in consecutive steps depend on the states in the respective previous step and on the defined transitions that are to be performed according to the fulfilment of the respective defined conditions. Therefore, even if there are different states that are assigned to the same set of attribute values, obtaining knowledge about the current state of the FSM and checking the respective current state is preferred.

As mentioned above, checking in particular means that the respective output information (about the current state and/or the current values of the attributes) is compared with information about expectations. If the check is successful, the next steps can be performed. Otherwise, processing the method can be stopped and the definitions mentioned above and/or the rules of operating the finite state machine may be amended and the check may be performed again.

In particular, the step of evaluating a functional behaviour of each of the at least one finite state machine may be performed for a defined sequence of the different sets of input information, wherein each of the different sets of input information is provided in a single step of evaluation that includes identifying at least one of the plurality of defined conditions which corresponds to the set of input information that is input in this step and includes performing a corresponding one of the plurality of defined transitions, wherein each following step of the evaluation starts with the state of the finite state machine at the end of its previous step and uses the set of input information that is next in the defined sequence. In this manner, the step-wise operation of the FSM can be evaluated in an early stage of designing a railway signalling system.

It has been explained that checking and in particular testing of the at least one FSM is performed at an early stage of executing the method, in particular when the at least one FSM has not been used as a part of a railway signalling system, neither for the design of a railway signalling system, nor as part of an implementation of a railway signalling system.

In other words, no implementation of the FSM is used before successfully checking the FSM. In particular, obtaining an implementation of the FSM means that its inputs and outputs are linked to other parts of a computer model that describes a railway signalling system. More particularly speaking, such an implementation of the FSM corresponds to states of a specific design of a railway signalling system, which specific design is in particular related to a specific design of a railway track or railway track system. Generally speaking, generating a computer model of a railway signalling system that is realized in practice or is designed for being realized in practice requires some knowledge about the railway track or railway track system for the control of which the railway signalling system is intended/designed. Therefore, receiving a design of a railway track or railway track system means that the required knowledge about the railway track or railway track system is obtained by the received information on the design. "Receiving a design" in this context does not mean that information on a complete design of the railway track or railway track system is required. In particular it is sufficient to receive information on all features of the railway track or railway track system that are required for the design/realization of the railway signalling system. A skilled person in the art of designing and/or controlling of railway signalling systems is aware of which features are required.

After successful checking of the at least one FSM and in particular after successful checking of all different types of FSMs which are required for modelling a specific railway signalling system, a computer model of the railway signalling system is generated. For this, the mentioned information on the design of a railway track or railway track system is required. This information can be received however before, during and/or after the step of evaluating the functional behaviour of the at least one FSM. On the other hand, the generation of the module can be completed only after the check of the required types of FSMs. In particular, implementations of the at least one FSM can only be generated after the check. Other sub-steps of the generation of the computer model may be performed earlier.

A further step of the method according to the present invention is either simulating a behaviour of the railway signalling system by using the generated computer model, or using the computer model to control and operation of the railway signalling system, or both. When the behaviour is simulated, results of the simulation are output for realizing the railway signalling system in practice. Optionally, realizing the railway signalling system in practice may also be a step of the method of the present invention. Examples of the results of the simulation are information on a structure of the computer model at least with respect to at least one implementation of the successfully checked FSM and how its inputs and outputs are linked to other parts of the computer model. Then, a real railway signalling system can be produced that comprises the features of the checked FSM (in particular the plurality of defined states, the plurality of defined transitions, the plurality of defined conditions and the plurality of defined attributes as well as the rules of operation of the FSM) and that comprises the same input and output interfaces as the checked FSM.

The invention also relates to a computer program or an arrangement of computer programs comprising instructions that cause a computer or arrangement of computers to perform the steps of any embodiment of the computer-implemented method when the computer program or the arrangement of computer programs is executed.

Furthermore, the invention relates to a computer-readable storage medium comprising instructions that cause a computer or arrangement of computers to perform the steps of any embodiment of the computer-implemented method when the computer program or the arrangement of computer programs is executed. The computer-readable medium may also be referred to as a storage medium and may be, for example, a digital medium such as a compact disc (CD), a floppy disk, a digital versatile disc (DVD), a hard disk, a memory card or a mass storage device, or may also be an analogue computer-readable medium such as a text (which is, for example, a printout of program code), an image, an array of images or an analogue disk-shaped or disc-shaped data carrier.

The computer may, for example, comprise a single computer or a computer network, or may comprise the computer or the computer network. With respect to its mode of operation, the computer or at least one of the computers of the arrangement may be, in particular, an analogue computer, a digital computer, and/or a hybrid computer. With respect to its size and design, it may be, in particular, a smartphone, a personal digital assistant (PDA), a tablet computer, an embedded system (e.g. embedded in the control computer of a coordinate measuring machine), a single- or multi-board computer, a personal computer (PC), a desktop computer, a workstation computer, a host computer or server integrated into a computer network, a thin client computer, a netbook, a notebook, a laptop, a mainframe computer, or a supercomputer, although some of the above types may also be implemented by a single computer such as a multi-board PC. Further, the computer or at least one of the computers may have one or more central processing units (CPU) and/or one or more computational cores per CPU. Also, graphics cards or even other dedicated cards with processing units that are part of a computer may exclusively or in combination with other computers or processing units constitute the means for carrying out the method. It should also be noted that, although the computer is preferably caused to execute the method by a computer program, the means for executing the method may also comprise at least one preferably programmable arrangement (for example, an arrangement of logic gates) implemented by hardware, such as an ASIC (Application-Specific Integrated Circuit), a PLD (Programmable Logic Device) or an FPGA (Field Programmable Gate Array). Said computer network or one of said computer networks may be a local network or a non-local network or a combination thereof. In particular, a local network may be a body area network (BAN), a wireless body area network (WBAN), a personal area network (PAN), a wireless personal area network (WPAN), a local area network (LAN) or a wireless LAN (WLAN). In particular, a non-local network may be a Metropolitan Area Network (MAN), a Wide Area Network (WAN), a Global Area Network (GAN), a Virtual Private Network (VPN) or Storage Area Network (SAN).

Therefore, more generally speaking, the invention also relates to a computer or computer arrangement comprising the mentioned computer program or arrangement of computer programs mentioned before.

Examples of the present invention and further features of embodiments of the present invention will be described with reference to the attached figures, which show schematically:
- Fig. 1: a railway track system and a railway signalling system that controls traffic on the railway track system,
- Fig. 2: states and transitions of a simple example of a finite state machine,
- Fig. 3: a structure of logical operations adapted to determine for a number of input values if a predefined condition is fulfilled which in case of fulfilment triggers an assigned transition of the states shown in Fig. 2,
- Fig. 4: a table showing Boolean values of attributes for the three states of a finite state machine shown in Fig. 2,
- Fig. 5: a flowchart showing steps of an embodiment of the method according to the present invention and additional steps that may or may not be performed as computer-implemented steps and.
- Fig. 6: a table showing states of four finite state machines in a time-series of checking an arrangement of state machines.

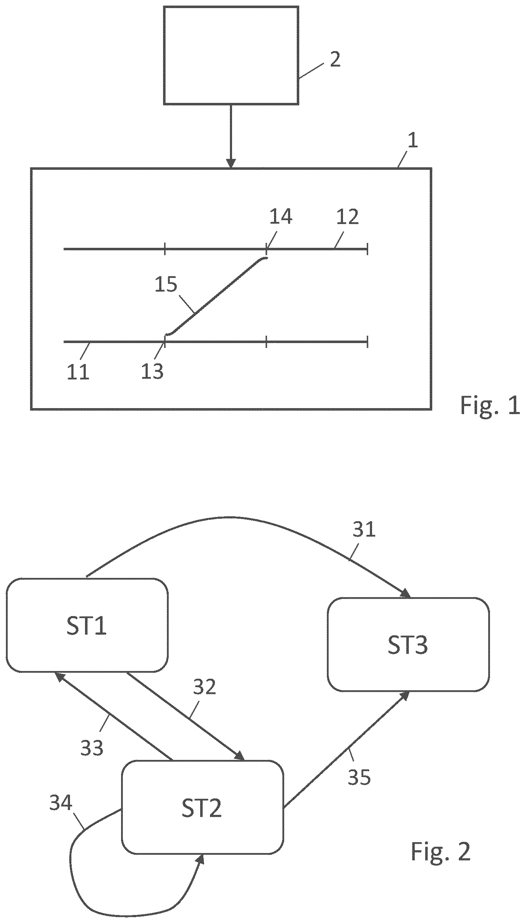

Fig. 1 shows a railway track system 1 having a first track 11 and a second track 12. A connection 15 connects the first track 11 with the second track 12. The connection 15 starts at a switch 13 of the first track 11 and ends at a switch 14 of the second track 12. Railway vehicles traveling on the first track 11 with reference to Fig. 1 from left to right may be diverted through the connection 15 to the second track 12.

The track configuration shown in Fig. 1 is just an arbitrary example. In practice, railway track systems typically comprise many additional tracks and other parts like railway stations, road crossings and railway vehicle storage areas. However, the invention can also be applied to a single track, for example with a railway signalling system that only controls traffic on the single track at one point of the track.

As schematically shown in Fig. 1, a railway signalling system 2 controls traffic on the railway track system 1. For example, the railway signalling system 2 may block or allow movement of any railway vehicle on the first track 11, on the second track 12 and from the first track 11 through the connection 15 to the second track 12.

Fig. 2 illustrates an example of a finite state machine. For simplicity, an example of a finite state module having only three states ST1, ST2, ST3 has been chosen. However, the invention relates to finite state machines with any number of states. The only requirement regarding the number of states of a particular finite state machine is that its number of states is fixed. If, for example, the definition of a finite state machine is changed, then the number of states can be amended, but this will result in a different finite state machine.

The three states ST1, ST2, ST3 shown in Fig. 2 may be, for example as mentioned above, "unlocked" (ST1) "locked" (ST2) and "emergency locking" (ST3). There are in total five transitions 31 to 35 defined with respect to the states ST1, ST2, ST3. A first transition 31 is defined from the first state ST1 to the third state ST3. A second transition 32 is defined from the first state ST1 to the second state ST2. A third transition 33 is defined from the second state ST2 to the first state ST1. A fourth transition 34 is defined from the second state ST2 to itself and a fifth transition is defined from the second state ST2 to the third state ST3.

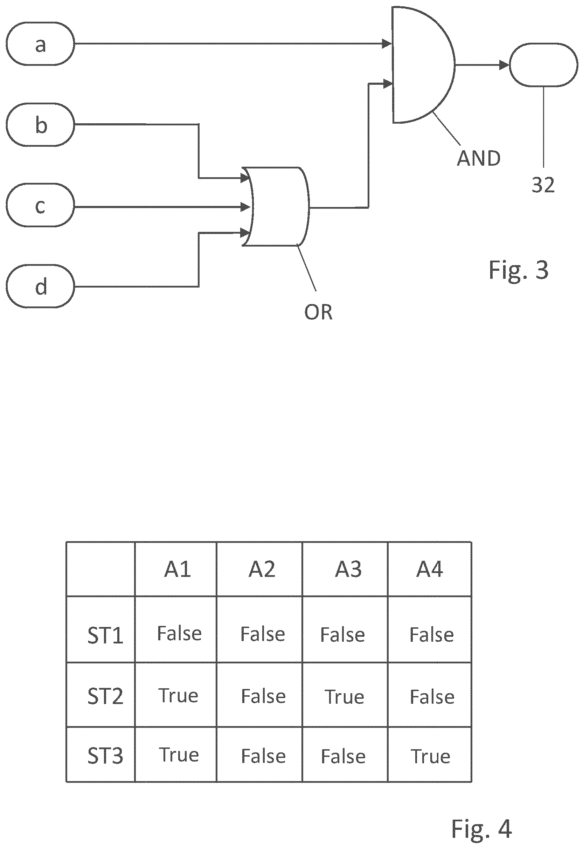

The respective one of the transitions 31 to 35 is performed if a corresponding assigned condition is fulfilled. Fig. 3 shows an example of a condition that triggers the second transition 32 of Fig. 2. There are four inputs a, b, c, d. Each input receives a Boolean value, namely either True or False, e.g. with respect to a state of a part of a railway track or railway track system that may be controlled using an implementation of the finite state machine. The second input b, the third input c and the fourth input d are logically combined by an operator OR. If at least one of the values of the inputs b to d is True, the output of the operator OR has also the value True. Otherwise, the output of the operator OR has the value False. The output of the operator OR and the first input a are inputs of an operator AND. If the values of both inputs of the operator AND are True, then the output value of the operator AND is also True. Otherwise, the output of the operator AND has the value False. If the output value of the operator AND is True, the condition is fulfilled and the assigned second transition 32 is triggered. However, this transition only results in the state of the finite state machine becoming the second state ST2 if the finite state machine is in the first state ST1. In particular, there are similarly defined logical operations for other conditions that trigger others of the five transitions 31 to 35 illustrated in Fig. 2. However, the number of the inputs of the logical operations, the type and number of the individual logical operations and the connections from the inputs to the logical operations and from the logical operations may be different for the other conditions.

The finite state machine that corresponds to Fig. 2 to 4 can be implemented after checking not only once, but several times. For example, it can be implemented for every part of a railway signalling system that is to be controlled using the same states, for which the same transitions leading to the same attribute values are defined. According to a particular example, the finite state machine with the three states ST1, ST2, ST3 may be used for any point on a track where traffic of railway vehicles can either be blocked or allowed by the control. Blocking the traffic may be caused by different reasons, why there are two different states of blocking.

Fig. 4 shows for the three states ST1, ST2, ST3, which are shown in Fig. 2, the assignment to values of attributes. The second row of the table of Fig. 4 refers to the first state ST1, the third row refers to the second state ST2 and the fourth row refers to the first state ST3. The second column of the table contains Boolean values of a first attribute A1, the third column contains Boolean values of a second attribute A2, the fourth column contains Boolean values of a third attribute A3 and the fifth column contains Boolean values of a fourth attribute A4. According to the specific example shown in Fig. 4, the first state ST1 is assigned to the values False, False, False, False (in this order) of the first to fourth attribute A1 to A4, the second state ST2 is assigned to the values True, False, True, False (in this order) of the first to fourth attribute A1 to A4, and the third state ST3 is assigned to the values True, False, False, True (in this order) of the first to fourth attribute A1 to A4.

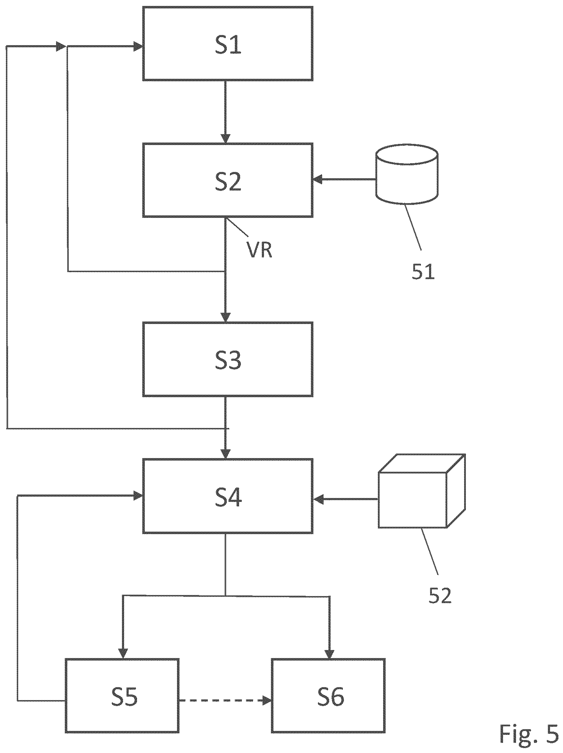

In the following, an example of executing the method of the present invention is described with reference to Fig. 5. According to a first step S1, which is a preparation step and is not necessarily a step of a computer-implemented method of performing the invention, at least one finite state machine is defined by defining a plurality of states of the machine, a plurality of transitions from one of the defined states to the same or another defined state, a plurality of conditions that trigger, when fulfilled, and assigned one of the defined transitions, assignments for each of the plurality of defined states to attribute values of attributes and rules of operating the finite state machine. The definition may partly be prepared for different types of finite state machines. For example, the state "locked" with assigned attribute values may be defined and may be used for the different types of finite state machines.

In a following step S2, each of the finite state machines that are defined according to the first step S1 are evaluated with respect to their functional behaviour by checking that respective ones of the plurality of defined states, that are assumed in reaction to the different sets of input information, in each case correspond to an expected state and/or that the output information represented by the values of the plurality of defined attributes, that are assumed in reaction to the different sets of input information, in each case correspond to expected values. Data of the expected states and/or expected values of attributes can be stored in a data storage 51, as indicated in Fig. 5. The data are accessed by the program that executes the step S2. A check result VR is output, in particular one or at least one check result per finite state machine. If the check result VR of the respective finite state machine indicates that the expectations are met, the process continues with the following step S3. If, however, the check result of the respective finite state machine indicates that the expectations are not met, the process returns to step S1, in which the definitions of the finite state machine are amended. For this finite state machine with amended definitions, the process then continues with executing again step S2.

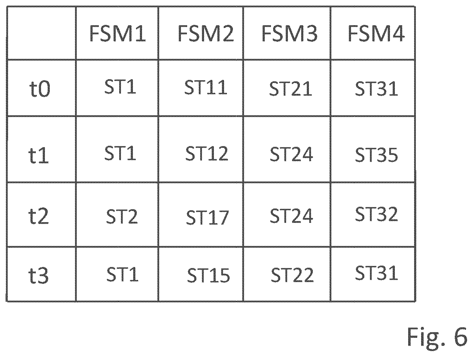

When executing step S2, the functional behaviour of each finite state machine is preferably tested in a time series of consecutive sub-steps. In each sub-step, it is determined if any of the conditions that are defined for the finite state machine is fulfilled. If this is the case, the corresponding assigned one of the defined transitions is performed which may change the state depending on the transition. Then, it is determined if the expectations (see above) at the end of the sub-step are met. In the following sub-step, the finite state machine starts with the state that is valid at the end of the previous sub-step. Although Fig. 6 refers to a check of an arrangement of a plurality of finite state machines, the first two columns in Fig. 6 can be considered as representing a time series of three sub-steps for a single finite state machine FSM 1. At time t0, the finite state machine FSM1 is in its default state ST1. When the first sub-step has been executed, the finite state machine FSM1, at time t1, it is in this specific example still in the same state ST1. The reason for this may be that a transition from the state ST1 to itself has being performed or that no executable transition has been determined as a result of any condition. In other words, the input information has not led to the fulfilment of a condition that has triggered an executable transition. When the next sub-step from time t1 to time t2 has been executed, the finite state machine FSM 1 is in a different state ST2 than before. The next time step from time t2 to t3 includes a transition back from state ST2 to state ST1.

In step S3, an arrangement of finite state machines FSM1, FSM2, FSM3, FSM4 is checked. As a preparation of this check, a test scenario has been defined which links the different finite state machines FSM1, FSM2, FSM3, FSM4 to each other. Each of the finite state machines FSM1, FSM2, FSM3, FSM4 of the arrangement depends on output information of at least one other of the finite state machines FSM1, FSM2, FSM3, FSM4 and/or output information of the respective finite state machine has an effect on the functional behaviour of at least one other of the finite state machines FSM1, FSM2, FSM3, FSM4. In particular, different arrangements of the finite state machines, that have been checked in step S2, can be checked using in each case one test scenario. In particular, at least one of the types of finite state machines that have been checked in step S2 can be used for more than one of the finite state machines of the arrangement to be tested/checked.

In the specific example that corresponds to Fig. 6, similarly as explained above with respect to the first two columns of the table in Fig. 6, the finite state machines FSM1, FSM2, FSM3, FSM4 are in their respective default state ST1, ST11, ST21, ST31 at time t0. With each sub-step of the time series, their state either changes or stays the same. The different states are denoted in Fig. 6 by "ST" followed by one or two digits.

If the result of the evaluation in step S3 indicates that the check is not successful, the process may return to step S1, similarly as described above with respect to step S2, provided that a reason for the non-successful check lies in the definition of a finite state machine. However, there may be other reasons for the non-successful check, such as errors in the way the different finite state machines are linked with respect to their inputs and/or outputs.

The step S3 is a preferred optional step, which means that it can be omitted. in the following step S4, a design of a railway track is received from a data source 52. This design relates to a track embodiment that has been realized in practice or is considered to be realized. In step S4, a corresponding railway signalling system is generated in form of a computer model using at least one instance of at least one finite state machine that has been evaluated in step S2 and optionally as well in step S3.

In at least one of the following steps S5, S6 the computer model of the railway signalling system generated in step S4 is used. In step S5, a behaviour of the railway signalling system is simulated using the computer model. In case the result of the simulation indicates that the computer model comprises error or that it may be improved, the process returns from step S5 to step S4, in which the computer model is amended. In step S6, the computer model is used to control and operation of the railway signalling system in practice. Preferably, step S5 is performed first and then, provided that no amendment of the computer model is required, step S6 is performed. However, it is also possible that the process terminates with step S5 and step S6 is not performed.

## Claims

1. A computer-implemented method of designing and/or controlling a railway signalling system (2) comprising the steps:
- providing at least one finite state machine (FSM), for which
∘ a plurality of states (ST) are defined that can be assumed by the finite state machine (FSM),
∘ a plurality of transitions (31 to 35) are defined, each transition being a transition from one of the defined states (ST) to either the same defined state or to a different one of the defined states (ST),
∘ a plurality of conditions are defined, the conditions depending on input information, wherein fulfilment of any one of the conditions triggers an assigned one of the defined transitions (31 to 35),
∘ a plurality of attributes are defined as output information, wherein each attribute may assume, at a time, one of a plurality of pre-defined values, wherein each of the plurality of defined states (ST) is assigned to at least one of the defined attributes having a specific one of the predefined values,
wherein the plurality of states (ST) of the finite state machine (FSM) are signalling states that can be realised in railway signalling systems in relation to a single component or an arrangement of components of a railway track or railway track system (1),
- evaluating a functional behaviour of each of the at least one finite state machine (FSM), based on different sets of input information that result in the fulfillment of different ones of the plurality of defined conditions, by checking that respective ones of the plurality of defined states (ST), that are assumed in reaction to the different sets of input information, in each case correspond to an expected state and/or that the output information represented by the values of the plurality of defined attributes, that are assumed in reaction to the different sets of input information, in each case correspond to expected values,
- receiving a design of a railway track or railway track system (1) that comprises a railway signalling system (2) and generating a computer model of the railway signalling system (2) by using at least one instance of at least one evaluated finite state machine (FSM), which has been evaluated according to the preceding step,
- simulating a behaviour of the railway signalling system (2) by using the computer model and outputting results of the simulation for realizing the railway signalling system (2) in practice and/or using the computer model to control an operation of the railway signalling system (2).

2. The method of claim 1, wherein the step of evaluating a functional behaviour of each of the at least one finite state machine (FSM) is performed for a defined sequence of the different sets of input information, wherein each of the different sets of input information is provided in an evaluation step of evaluation that includes identifying at least one of the plurality of defined conditions which corresponds to the set of input information that is input in this evaluation step and includes performing a corresponding one of the plurality of defined transitions (31 to 35), wherein each following step of the evaluation starts with the state of the finite state machine (FSM) at the end of its previous step and uses the set of input information that is next in the defined sequence.

3. A computer program or an arrangement of computer programs comprising instructions that cause a computer or arrangement of computers to perform the steps of any one of the preceding method claims when the computer program or the arrangement of computer programs is executed.

4. Computer-readable storage medium comprising instructions that cause a computer or arrangement of computers to perform the steps of any one of the preceding method claims when the computer program or the arrangement of computer programs is executed.

5. Computer or computer arrangement comprising the computer program or the arrangement of computer programs of claim 3 and/or comprising the computer-readable storage medium of claim 4.
